# EUROPÄISCHE PATENTSCHRIFT

(11) **EP 1 816 055 B1**
(45) Veröffentlichungstag und Bekanntmachung des Hinweises auf die Patenterteilung: **01.12.2010**
(21) Anmeldenummer: 07466003.6
(22) Anmeldetag: 31.01.2007
(51) Int. Cl.: B62D 25/14

(54) **Armaturenbretträger eines Fahrzeuges**
Support beam for the dashboard of a vehicle
Traverse de support pour tableau de bord de véhicule

(30) Priorität: 06.02.2006 CZ 20060087
(43) Veröffentlichungstag der Anmeldung: 08.08.2007
(73) Patentinhaber: Skoda Auto a.s., 293 60 Mlada Boleslav (CZ)
(72) Erfinder: Bayerl, Jindrich, 29501 Mnichovo Hradiste (CZ); Kucera, Miroslav, 29301 Mlada Boleslav (CZ)

(56) Entgegenhaltungen:
- EP-A2- 0 990 578
- DE-A1- 10 029 813
- DE-A1- 10 040 824
- US-B1- 6 250 678

## Beschreibung

### Technisches Gebiet

Die Erfindung bezieht sich auf einen Armaturenbrettträger eines Fahrzeuges, insbesondere für Pkw's, der zur Befestigung von Lenksäule, Airbagmodulen und weiteren Elementen des Armaturenbrettes vorgesehen ist.

### Bisheriger Stand der Technik

Die meisten Fahrzeugkarosserien haben eine Tragstruktur mit einem Paar von Vertikalsäulen an gegenüberliegenden Seitenwänden der Fahrzeugkarosserie im Bereich der Verbindung von Motor- und Fahrzeuginnenraum. Die Säulen sind üblicherweise durch einen Querträger verbunden, der die Drehungsfestigkeit der Karosserie erhöht, bei der Aufnahme eines Front- und Seitenaufpralls behilflich ist und die Lenksäule und die Airbags abstützt. Der Querträger stützt auch die Armaturenbrettschale, den Handschuhkasten und weitere Elemente ab.

Die bisher eingesetzten Armaturenbrettträger werden bei Pkw's in der Regel als Schweißgruppen und im kleineren Maße auch als Aluminiumlegierung-, bzw. Magnesiumgussteile gelöst.

Den Grundteil der eingesetzten Schweißteile bilden form- und volumengeformte Profile mit einem Kreis-, Quadrat- oder Rechteckdurchschnitt, durchlaufend entlang der ganzen Fahrzeugbreite. Die Tragdurchschnitte mit unterschiedlicher Drehungs- und Biegesteifigkeit werden durch Anschweißung von zusätzlichen Verfestigungsprofilen, Streben u. ä. erreicht. Eine solche Lösung ist z.B. im Dokument WO 0017031 beschrieben. Die Nachteile dieser Lösungen sind ihre erheblichen Raumansprüche, eine eingeschränkte Wahlmöglichkeit was die Position der einzelnen Armaturenbrettmodule und die Armaturenbrettform anbelangt, sowie das hohe Modulgewicht.

Die weiteren bekannten Lösungen nutzten Schweißteile aus zwei oder mehreren Blechpressteilen aus verschiedenen Blechwerkstoffen (Stahl, Aluminiumlegierung,...) oder eine Kombination von beiden Lösungen aus, die z. B. im Dokument US 4432565 beschrieben sind. Die jeweiligen Armaturenbrett-, Kabelbäume-, Beifahrerairbaghalter u. ä. sind an diese Träger üblicherweise angeschweißt, angeschraubt oder angenietet.

Aus der DE 100 40 824 A1, die dem Oberbegriff des Anspruchs 2 entspricht, ist auch ein Träger bekannt, der durch einen Rohrteil (60) und ein langes Element (22) mit rechteckigem Querschnitt gebildet ist, deren Ende axial gegeneinander entfernt sind und deswegen durch einen Verbindungsteil verbunden sind. Aus der DE 100 29 813 A1 ist wieder ein Querträger bekannt, der aus zwei Teilabschnitten (2A, 28) gebildet ist, die sich im mittleren Bereich teilweise überdecken, so dass die jeweiligen Außenkonturen der jeweiligen Teilabschnitten aneinander angelegt werden und zusammen verschraubt werden. Schließlich ist in der EP 0 990 578 A2, die dem Oberbegriff des Anspruchs 1 entspricht, ein Querträger beschrieben, der zumindest zwei in axialer Verlängerung angeordnete Profilabschnitte aufweist. Hierbei wird der Profilabschnitt kleineren Querschnitts über zumindest eine Teillänge mit dem Profilabschnitt größeren Querschnitts überlappend angeordnet und zwar, indem der kleinere Profilabschnitt in den größeren eingeführt wird und dort mit Verbindungsteilen stabilisiert wird.

Solche Lösungen sind jedoch sehr kompliziert, sie beinhalten eine große Anzahl von Schweißverbindungen, sind produktionsintensiv und daher auch kostspielig.

### Darstellung der Erfindung

Die angeführten Nachteile beheben im bedeutenden Maße die Armaturenbrettträger gemäß Anspruch 1 und Anspruch 2. Der Träger erstreckt sich über die Fahrzeugbreite zwischen zwei Karosseriesäulen und wird durch zwei parallele Rohrteile gebildet, wobei ihre Längen kürzer als die Länge des kompletten Trägers sind. Die Rohrteile sind mit ihren inneren, von Karosseriesäulen abgekehrten, Enden radial und axial gegeneinander versetzt und fest miteinander verbunden. Die inneren Enden der Rohrteile sind so gegeneinander versetzt, dass sie sich axial mindestens teilweise übergreifen.

Nach einem ersten Aspekt der Erfindung ist der Achsabstand der Rohrteile im Bereich der Versetzung kleiner als die Hälfte ihrer Durchmessersumme. Einer der Rohrteile hat dann erfindungsgemäß von seinem inneren Ende aus entlang der Versetzung in seinem Mantel einen Längsausschnitt, in der Regel in Rechteckform, durch den er an den Mantel des anderen Rohteiles aufgesetzt ist. Die so zusammengebauten Rohrteile sind durch Schweißen verbunden.

Nach einem zweiten Aspekt der Erfindung ist der Achsabstand der Rohrteile im Bereich der Versetzung z. B. aus Einbaugründen, gleich oder größer als die Hälfte ihrer Durchmessersumme. In diesem Fall sind sie durch Verbindungsteile, in der Regel durch Blechpressteile, verbunden, die an die Rohrteile angeschweißt sind. Die Verbindungsteile befinden sich mindestens im Bereich der inneren Enden beider Rohrteile und werden vorzugsweise als ein Teil der zum Träger befestigten Elemente gebildet, z. B. des Lenksäulenhalters und/oder der zum Mitteltunnel befestigten Strebe.

In einer vorteilhaften Ausführung hat der Rohrteil der Fahrerseite einen größeren Durchmesser und/oder eine größere Wanddicke als der Rohrteil der Beifahrerseite, weil er u.a. die Lenksäule unterstützt und somit einem größeren Kraftangriff ausgesetzt ist. Um das kleinstmögliche Gewicht bei ausreichender Steifheit zu erreichen, ist der Rohrteil der Fahrerseite so kurz wie möglich, er reicht nicht bis zur Fahrzeugmitte und zu seinem inneren Ende ist in der Regel eine vertikale Stütze angeschlossen, die den Träger mit dem Mitteltunnel des Fahrzeuges verbindet. Der Rohrteil der Beifahrerseite kann vorzugsweise einen kleineren Durchmesser und eine kleinere Wanddicke haben, wodurch eine Gewichts- und Materialeinsparung erreicht wird.

Die Rohrteile können auch lokale Biegungen zur Bildung der günstigsten Form ausweisen, wobei im Bereich der Versetzung beide Rohrteile parallel sind.

### Übersicht der Figuren auf den Zeichnungen

In den Fig. 1 bis 4 ist das erste erfindungsgemäße Ausführungsbeispiel des Trägers dargestellt, wobei in Fig. 1 der Träger in axonometrischer Ansicht, in Fig. 2 in Draufsicht und in Fig. 3 in Heckansicht zu sehen ist. Die Fig. 4 zeigt einen Querschnitt des Trägers im Bereich der Versetzung der Rohrteile.

In den Fig. 5 bis 8 ist das zweite Ausführungsbeispiel der Erfindung dargestellt, wobei in Fig. 5 der Träger in axonometrischer Ansicht, in Fig. 6 in Draufsicht und in Fig. 7 in Heckansicht zu sehen ist. Die Fig. 8 zeigt einen Querschnitt des Trägers im Bereich der Rohrteile.

### Beschreibungen von Ausführungsbeispielen der Erfindung

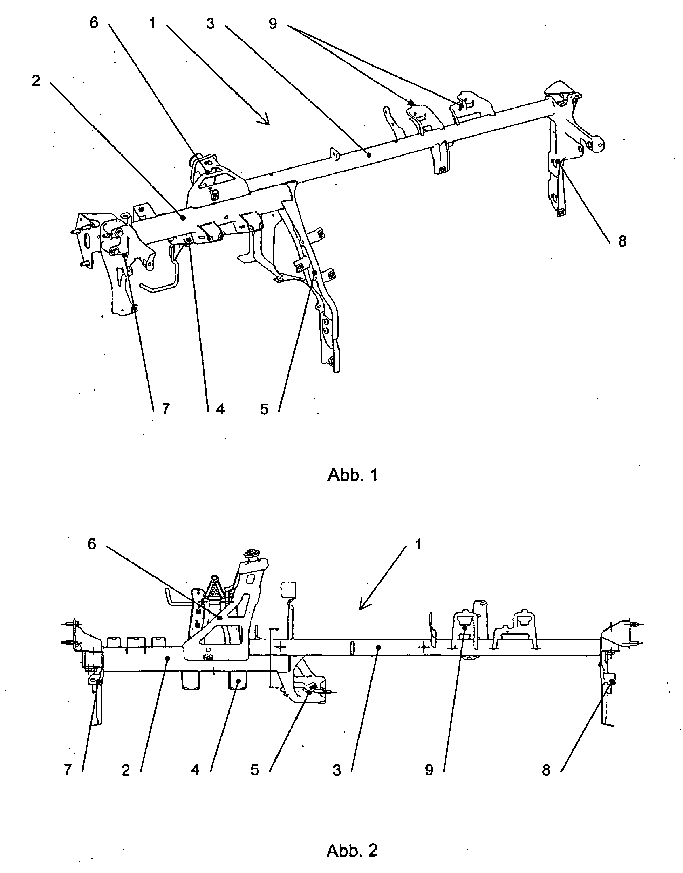

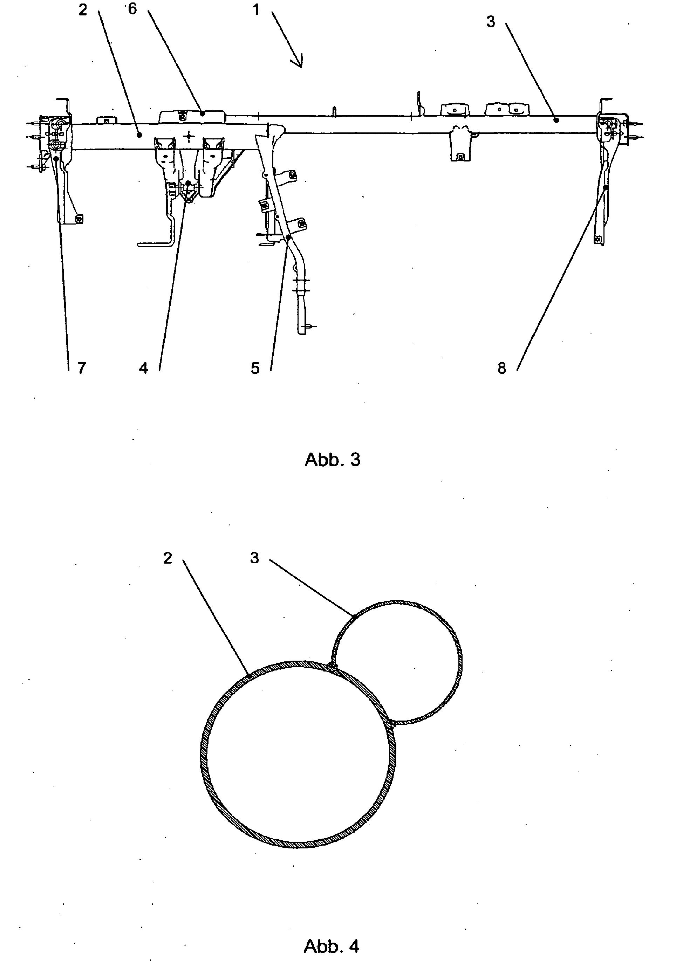

Das erste erfindungsgemäße Ausführungsbeispiel des Trägers für Fahrzeuge mit Linkslenkung ist in den Fig. 1 bis 4 dargestellt.

Der Träger 1 erstreckt sich im Frontbereich der Tragstruktur des Fahrzeuges zwischen den seitlichen Vertikalsäulen, auf denen die vorderen Seitentüren aufgehängt sind. Der erste Rohrteil 2 der Fahrerseite erstreckt sich von der linken Seitensäule horizontal bis zur Fahrzeugmitte. An seinem äußeren Ende ist ein Bügel 7 angeschweißt, durch den der Träger 1 zur linken Seitensäule oder zu einem mit dieser fest verbundenen Teil angeschraubt ist. An das innere Ende des ersten Rohrteiles 2 ist eine Strebe 5 angeschweißt, die mit ihren unteren Teil an das Mitteltunnel des Fahrzeuges angeschraubt ist, außerdem erhöht sie die Steifheit der Konstruktion und hat Bügel zur Befestigung von Elementen der Mittelkonsole des Armaturenbrettes.

Zum ersten Rohrteil 2 sind von unten ein Halter 4 der Lenksäule und von oben eine Strebe 6 angeschweißt, die den Träger 1 zur Trennwand zwischen Motor- und Fahrzeuginnenraum befestigt. Der Halter 4 sowie die Strebe 6 sind als Stahlblechpressteile mit korrespondierender Form ausgeführt, die den ersten Rohrteil 2 umhüllt, sie sind miteinander verschweißt und bilden damit einen steifen Kasten.

Von der rechten Seitensäule des Fahrzeuges erstreckt sich horizontal in Richtung zur Fahrzeugmitte der zweite Rohrteil 3 der Beifahrerseite, der gegenüber dem ersten Rohrteil 2 in Richtung nach vorne und nach oben radial versetzt ist, und dessen inneres Ende weiter über das innere Ende des ersten Rohrteiles 2 zur linken Seitensäule hin übergreift. Entlang der Versetzung mit dem ersten Rohrteil 2 hat der zweite Rohrteil 3 von seinem inneren Ende aus einen Rechteckausschnitt, der einen Achsabstand beider Rohrteile zu erreichen ermöglicht, der kleiner als die Hälfte ihrer Durchmessersumme ist. Der zweite Rohrteil 3 liegt mit diesem Ausschnitt an den Mantel des ersten Rohrteiles 2 an und an der Stoßstelle ist er mit diesem verschweißt. Einen Ausschnitt im Mantel kann man auch im ersten Rohrteil 2 bilden und den Mantel des zweiten Rohrteils 3 kompakt lassen. Wegen einer höheren Belastung des ersten Rohrteiles 2, der den wesentlichen Part des Kraftangriffes von der Lenksäule aufnimmt, ist es jedoch günstiger, den Ausschnitt nur im zweiten Rohrteil 3 zu bilden. Mit Hinsicht auf die Verteilung des Kraftangriffes, der den Träger 1 belastet, hat der erste Rohrteil 2 einen größeren Durchmesser sowie eine größere Wanddicke als der zweite Rohrteil 3. Zwecks Gewichts- und Materialeinsparung ist auch seine Länge wesentlich kleiner als die Länge des zweiten Rohrteiles 3 und reicht nicht bis zur Fahrzeugmitte hin, wobei sein inneres Ende durch eine Strebe 5 gegen den Mitteltunnel des Fahrzeuges gestützt wird. Weiter zur rechten Seitensäule erstreckt sich nur noch der zweite Rohrteil 3 mit einem wesentlich kleineren Längengewicht.

Die Länge beider Rohrteile, die Größe und die Position der Versetzung werden mit Vorteil so gewählt, dass sich das innere Ende des zweiten Rohrteiles 3 im Bereich des Halters 4 der Lenksäule und der Strebe 6 befindet und an diese angeschweißt ist, wodurch eine bedeutende Steifheit des ganzen Trägers sowie der Lagerung der Lenksäule erreicht wird.

An den zweiten Rohrteil 3 ist an das äußere Ende ein Bügel 8 angeschweißt, durch den der Träger 1 an die linke Seitensäule oder an einem mit dieser fest verbundenen Teil angeschraubt ist, außerdem sind hier auch die Halter 9 des Beifahrerairbagmoduls und weitere Halter zur Befestigung der Armaturenbrettelemente angeschweißt.

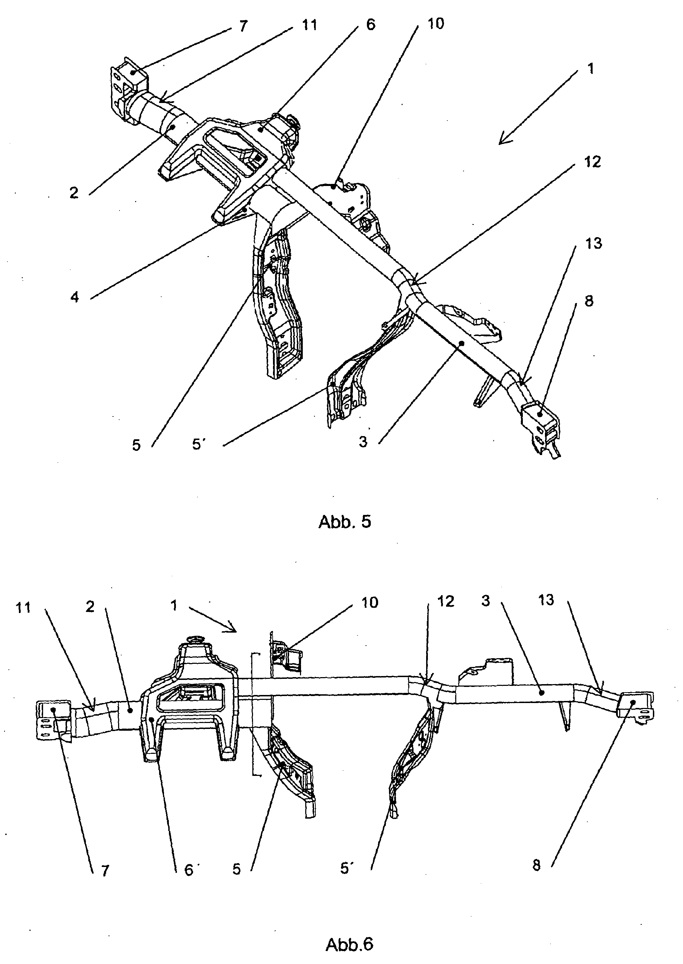

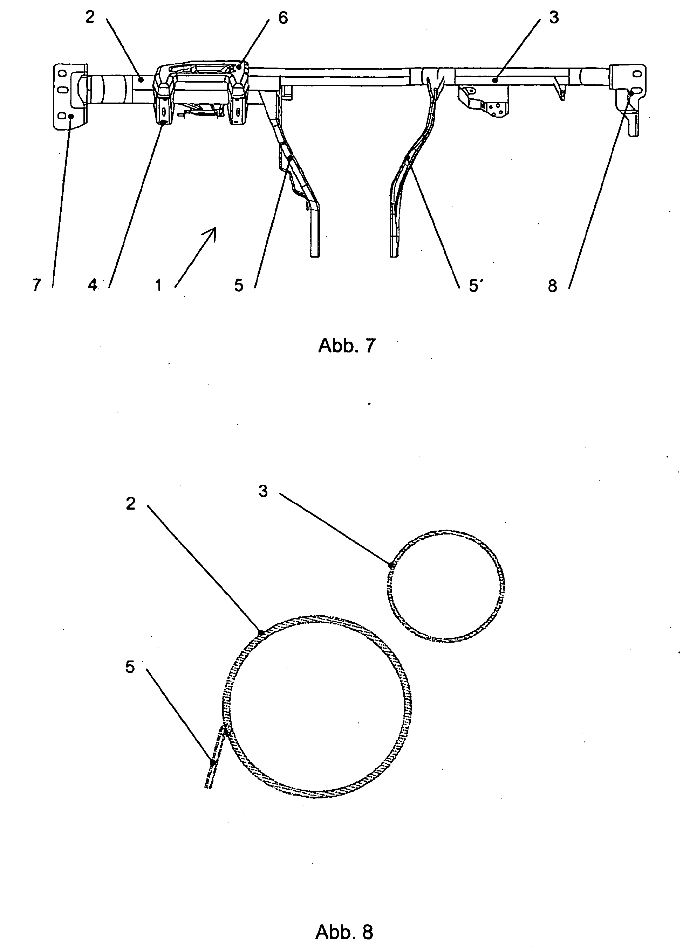

Ein Beispiel, bei dem aus Einbaugründen der Achsabstand der Rohrteile größer als die Hälfte ihrer Durchmessersumme ist, und bei dem ihre Mäntel nicht ineinander greifen, ist in den Fig. 5 bis 8 dargestellt. Die Rohrteile 2 und 3 sind im Bereich des inneren Endes des zweiten Rohrteiles 3 mit Hilfe eines Schweißteils, die durch das Zusammenschweißen des Halters 4 der Lenksäule und der Strebe 6 entstand, und im Bereich des inneren Endes des ersten Rohrteiles 2 mit Hilfe eines Verbindungsteiles 10 miteinander verbunden. Die Teile sind miteinander verschweißt.

Der erste Rohrteil 2 ist mit einer Biegung zwischen dem Bügel 7 und dem Halter 4 versehen, die ihn parallel nach vorne versetzt. Ähnlich ist auch der zweite Rohrteil 3 mit Biegungen 12, 13 zur Erreichung der gewünschten Form und Lage des Trägers 1 versehen. Durch die Anwendung der Biegungen kann der Träger 1 leicht verformt und gegenüber den Seitensäulen versetzt werden, an die er zwecks Anpassung der Forderungen an seinen Einbau in die Fahrzeugkarosserie befestigt ist.

An den Träger 1 sind ferner die Verfestigungsstreben 5, 5', die mit ihren unteren Parts an die Seiten des Mitteltunnels des Fahrzeuges befestigt sind, der Halter des Airbagmoduls 9 und eventuell weitere Bügel angeschweißt.

Die Rohrteile werden vorzugsweise aus Stahlrohren mit einem Kreisquerschnitt gefertigt und die an diese angeschweißten Halter, Streben und Bügel sind in der Regel

Pressteile oder Schweißgruppen aus Stahlblech. Anstatt von Stahl können zwecks Gewichtseinsparung z. B. Alu-Legierungen eingesetzt werden.

Es ist ersichtlich, dass sich im Fall eines Fahrzeuges mit Rechtslenkung der erste Rohrteil von der rechten und der zweite Rohrteile von der linken Seitensäule der Karosserie erstrecken.

### Industrielle Nutzbarkeit

Der Armaturenbrettträger des Fahrzeuges kann erfindungsgemäß in allen Fahrzeugen zur Abstützung des Armaturenbrettes und seiner Module verwendet werden, insbesondere bei Fahrzeugen mit schwierigen Einbaubedingungen.

## Patentansprüche

1. Armaturenbrettträger eines Fahrzeuges, der sich über die Fahrzeugbreite zwischen zwei Karosseriesäulen erstreckt und zwei parallele Rohrteile aufweist, wobei die Rohrtelle (2, 3) mit ihren inneren, von Karosseriesäulen abgekehrten, Enden radial und axial gegeneinander versetzt sind und fest miteinander verbunden sind, wobei der Achsabstand der Rohrteile (2, 3) im Bereich der Versetzung kleiner als die Hälfte ihrer Durchmessersumme ist,
**dadurch gekennzeichnet,**
**dass** die inneren Enden der Rohrteile (2, 3) so gegeneinander versetzt sind, dass sie sich axial mindestens teilweise übergreifen, und dass einer der Rohrteile von seinem inneren Ende aus entlang der Versetzung einen Längsausschnitt zum Anliegen an den Mantel des zweiten Rohrteiles hat.

2. Armaturenbrettträger eines Fahrzeuges, der sich über die Fahrzeugbreite zwischen zwei Karosseriesäulen erstreckt und zwei parallele Rohrteile aufweist, wobei die Rohrteile (2, 3) mit ihren inneren, von Karosseriesäulen abgekehrten, Enden radial und axial gegeneinander versetzt sind und fest miteinander verbunden sind, wobei der Achsabstand der Rohrteile (2, 3) im Bereich der Versetzung gleich oder größer als die Hälfte ihrer Durchmessersumme ist,
**dadurch gekennzeichnet,**
**dass** die inneren Enden der Rohrteile (2, 3) so gegeneinander versetzt sind, dass sie sich axial mindestens teilweise übergreifen, und dass die Rohrteile (2, 3) durch Verbindungsteile (4, 6, 10) verbunden sind.

3. Armaturenbrettträger eines Fahrzeuges nach Anspruch 1,
**dadurch gekennzeichnet,**
**dass** der Ausschnitt in dem Rohrteil gebildet ist, der sich von der Säule an der Beifahrerseite erstreckt.

4. Armaturenbrettträger eines Fahrzeuges nach Anspruch 1 oder 3,
**dadurch gekennzeichnet,**
**dass** die Rohrteile (2, 3) durch Schweißen verbunden sind.

5. Armaturenbrettträger eines Fahrzeuges nach Anspruch 2,
**dadurch gekennzeichnet,**
**dass** die Rohrteile (2, 3) mit den Verbindungsteilen (4, 6, 10) durch Schweißen verbunden sind.

6. Armaturenbrettträger eines Fahrzeuges nach Anspruch 5,
**dadurch gekennzeichnet,**
**dass** die Verbindungsteile (4, 6, 10) mindestens im Bereich der inneren Enden beider Rohrteile (2, 3) untergebracht sind.

7. Armaturenbrettträger eines Fahrzeuges nach einem der vorherigen Ansprüche,
**dadurch gekennzeichnet,**
**dass** der erste Rohrteil (2) eine kleinere Länge und dabei einen größeren Durchmesser und/oder eine größere Wanddicke als der zweite Rohrteil (3) hat.

8. Armaturenbrettträger eines Fahrzeuges nach Anspruch 6,
**dadurch gekennzeichnet,**
**dass** der erste Rohrteil (2) ein Teil ist, der sich von der Säule an der Fahrerseite erstreckt.

## Claims

1. Support beam for the dashboard of a vehicle, the support beam extending over the vehicle width between two body pillars and having two parallel tube parts, wherein the tube parts (2, 3) are offset radially and axially in relation to each other at the inner ends thereof remote from body pillars and are connected fixedly to each other, wherein the centre distance of the tube parts (2, 3) in the region of the offset is smaller than half of the diameter sum thereof, **characterized in that** the inner ends of the tube parts (2, 3) are offset in relation to each other in such a manner that they at least partially fit over each other axially, and **in that** one of the tube parts has a longitudinal cutout from the inner end thereof along the offset for bearing against the casing of the second tube part.

2. Support beam for the dashboard of a vehicle, the support beam extending over the vehicle width between two body pillars and having two parallel tube parts, wherein the tube parts (2, 3) are offset radially and axially in relation to each other at the inner ends thereof remote from body pillars and are connected fixedly to each other, wherein the centre distance of the tube parts (2, 3) in the region of the offset is equal to or greater than half of the diameter sum thereof, **characterized in that** the inner ends of the tube parts (2, 3) are offset in relation to each other in such a manner that they at least partially fit over each other axially, and **in that** the tube parts (2, 3) are connected by connecting parts (4, 6, 10).

3. Support beam for the dashboard of a vehicle according to Claim 1, **characterized in that** the cutout is formed in the tube part which extends from the pillar on the passenger's side.

4. Support beam for the dashboard of a vehicle according to Claim 1 or 3, **characterized in that** the tube parts (2, 3) are connected by welding.

5. Support beam for the dashboard of a vehicle according to Claim 2, **characterized in that** the tube parts (2, 3) are connected to the connecting parts (4, 6, 10) by welding.

6. Support beam for the dashboard of a vehicle according to Claim 5, **characterized in that** the connecting parts (4, 6, 10) are accommodated at least in the region of the inner ends of the two tube parts (2, 3).

7. Support beam for the dashboard of a vehicle according to one of the preceding claims, **characterized in that** the first tube part (2) has a smaller length and yet a larger diameter and/or a greater wall thickness than the second tube part (3).

8. Support beam for the dashboard of a vehicle according to Claim 6, **characterized in that** the first tube part (2) is a part which extends from the pillar on the driver's side.

## Revendications

1. Support de tableau de bord d'un véhicule, qui s'étend sur toute la largeur du véhicule entre deux colonnes de la carrosserie, et qui présente deux parties tubulaires parallèles, les parties tubulaires (2, 3) étant décalées radialement et axialement l'une par rapport à l'autre avec leurs extrémités internes, opposées aux colonnes de la carrosserie, et étant connectées fixement l'une à l'autre, la distance axiale entre les parties tubulaires (2, 3) dans la région du décalage étant inférieures à la moitié de la somme de leurs diamètres,
**caractérisé en ce que**
les extrémités internes des parties tubulaires (2, 3) sont décalées l'une par rapport à l'autre de telle sorte qu'elles viennent en prise au moins partiellement axialement l'une au-dessus de l'autre, et **en ce qu'**une des parties tubulaires présente, depuis son extrémité interne, le long du décalage, une portion longitudinale en vue de son application contre l'enveloppe de la deuxième partie tubulaire.

2. Support de tableau de bord d'un véhicule, qui s'étend sur toute la largeur du véhicule entre deux colonnes de la carrosserie, et qui présente deux parties tubulaires parallèles, les parties tubulaires (2, 3) étant décalées radialement et axialement l'une par rapport à l'autre avec leurs extrémités internes, opposées aux colonnes de la carrosserie, et étant connectées fixement l'une à l'autre, la distance axiale entre les parties tubulaires (2, 3) dans la région du décalage étant supérieure ou égale à la moitié de la somme de leurs diamètres,
**caractérisé en ce que**
les extrémités internes des parties tubulaires (2, 3) sont décalées l'une par rapport à l'autre de telle sorte qu'elles viennent en prise au moins partiellement axialement l'une au-dessus de l'autre, et **en ce que** les parties tubulaires (2, 3) sont connectées par des pièces de connexion (4, 6, 10).

3. Support de tableau de bord d'un véhicule selon la revendication 1,
**caractérisé en ce que**
une découpure est réalisée dans la partie tubulaire qui s'étend depuis la colonne sur le côté du passager.

4. Support de tableau de bord d'un véhicule selon la revendication 1 ou 3,
**caractérisé en ce que**
les parties tubulaires (2, 3) sont connectées par soudage.

5. Support de tableau de bord d'un véhicule selon la revendication 2,
**caractérisé en ce que**
les parties tubulaires (2, 3) sont connectées aux pièces de connexion (4, 6, 10) par soudage.

6. Support de tableau de bord d'un véhicule selon la revendication 5,
**caractérisé en ce que**
les pièces de connexion (4, 6, 10) sont montées au moins dans la région des extrémités internes des deux parties tubulaires (2, 3).

7. Support de tableau de bord d'un véhicule selon l'une quelconque des revendications précédentes,
**caractérisé en ce que**
la première partie tubulaire (2) présente une plus petite longueur et, en l'occurrence, un plus grand diamètre et/ou une plus grande épaisseur de paroi que la deuxième partie tubulaire (3).

8. Support de tableau de bord d'un véhicule selon la revendication 6,
**caractérisé en ce que**
la première partie tubulaire (2) est une pièce qui s'étend depuis la colonne du côté du conducteur.
